# EUROPÄISCHE PATENTANMELDUNG

(11) **EP 2 884 357 A1**
(43) Veröffentlichungstag der Anmeldung: **17.06.2015**
(21) Anmeldenummer: 13197505.4
(22) Anmeldetag: 16.12.2013
(51) Int. Cl.: G05B 19/042, G06F 9/02

(54) **Anordnung zum Anschluss über USB eines Bediengeräts an eine Automatisierungskomponente**

(71) Anmelder: Siemens Aktiengesellschaft, 80333 München (DE)
(72) Erfinder: Andlauer, Timo, 76185 Karlsruhe (DE); Walli, Markus, 76307 Karlsbad (DE)

(57) **Zusammenfassung**

Die Erfindung betrifft eine Anordnung mit mehreren Komponenten (2, 3, 4) einer Automatisierungseinrichtung (1) und mit einem Bediengerät (8), wobei das Bediengerät (8) und mindestens eine dieser Komponenten (2, 3, 4) jeweils eine USB-Schnittstelle (6, 7, 9) aufweisen, die zum Anschließen des Bediengerätes (8) an die mindestens eine Komponente (2, 3) über ein USB-Kabel (10) und zur Übermittlung von Bediengerät-Eingaben an die mindestens eine Komponente (2, 3) vorgesehen sind, wobei die Bediengerät-Eingaben Servicemaßnahmen an der mindestens einen Komponente (2, 3) einleiten. Mittels geeigneter Maßnahmen können in der Anordnung Service-Maßnahmen vereinfacht bewerkstelligt werden.

## Beschreibung

Die Erfindung betrifft ein Anordnung mit mehreren Komponenten einer Automatisierungseinrichtung und mit einem Bediengerät, wobei mindestens eine dieser Komponenten und das Bediengerät jeweils eine USB-Schnittstelle aufweisen, die zum Anschließen des Bediengerätes an die mindestens eine Komponente über ein USB-Kabel und zur Übermittlung von Bediengerät-Eingaben an die mindestens eine Komponente vorgesehen sind, wobei die Bediengerät-Eingaben Servicemaßnahmen an der mindestens einen Komponente einleiten. Darüber hinaus betrifft die Erfindung ein Bediengerät für eine derartige Anordnung.

Eine Anordnung gemäß der im Betreff genannten Art ist im Umfeld der Automatisierungstechnik hinlänglich bekannt. Eine Vielzahl von Automatisierungskomponenten, beispielsweise Komponenten in Form von analogen oder digitalen Ein-/Ausgabebaugruppen, Kommunikationsbaugruppen, CPU-Baugruppen sowie Personal Computer für den Industriebereich (Industrie PC) sind räumlich verteilt angeordnet. Nur einige dieser Komponenten weisen eine Tastatur auf, mittels der ein Service-Techniker an diesen Komponenten Service-Maßnahmen vor Ort einleiten und/oder durchführen kann. Beispielsweise veranlasst der Service-Techniker, dass aufgrund einer vorgegebenen Tastatur- oder Touchpad-Eingabe ein Diagnose- oder Fehlerspeicher einer dieser Komponenten ausgelesen oder eine Testroutine auf einer dieser Komponenten gestartet wird. Um derartige Service-Maßnahmen auch an den Komponenten bewerkstelligen zu können, welche über keine Tastatur, Touchpad und/oder Maus verfügen, muss die Standardausrüstung eines Service-Technikers daher auch derartige Bediengeräte umfassen.

Der Erfindung liegt daher die Aufgabe zugrunde, eine Anordnung der eingangs genannten Art zu schaffen, in welcher Service-Maßnahmen vereinfacht bewerkstelligt werden können. Darüber hinaus ist ein Bediengerät anzugeben, welches für eine derartige Anordnung geeignet ist.

Diese Aufgabe wird im Hinblick auf die Anordnung dadurch gelöst, dass
- das Bediengerät als ein mit einer Eingabeeinheit versehener mobiler Computer ausgebildet ist,
- eine vorgegebene Eingabe mittels der Eingabeeinheit oder eine vorgegebene Schalterbetätigung am Computer einen Treiber-Baustein des Computers freischaltet und
- der Treiber-Baustein dazu ausgebildet ist, nach dessen Freischaltung weitere Eingaben mittels der Eingabeeinheit der mindestens einen Komponente zu übermitteln.

Bezüglich des Bediengerätes ist zur Lösung dieser Aufgabe vorgesehen, dass
- das Bediengerät als ein mit einer Eingabeeinheit versehener mobiler Computer ausgebildet ist,
- eine vorgegebene Eingabe mittels der Eingabeeinheit oder eine vorgegebene Schalterbetätigung am Computer einen Treiber-Baustein des Computers freischaltet, und
- der Treiber-Baustein dazu ausgebildet ist, nach dessen Freischaltung weitere Eingaben mittels der Eingabeeinheit der mindestens einen Komponente zu übermitteln.

Vorteilhaft ist, dass die Eingabeeinheit des ohnehin zur Standardausrüstung eines Service-Technikers gehörenden mobilen Computers, welcher z. B. als ein Laptop, ein Notebook, ein Netbook, ein Tablet-Computer oder als ein Smartphone ausgebildet sein kann, zur Einleitung von Servicemaßnahmen vorgesehen ist. Auf eine Tastatur, eine Maus oder ein sonstiges Eingabegerät kann verzichtet werden, derartige Geräte als Bestandteil der Standardausrüstung des Service-Technikers sind nicht mehr erforderlich.

In einer Ausgestaltung der Erfindung versorgt die mindestens eine Komponente, beispielsweise ein in einem Rack eines Schaltschranks angeordneter Industrie-PC, die USB-Schnittstelle des mobilen Computers mit Energie. Diese Energie reicht aus, um den Betrieb und die Funktion des Treiber-Bausteins auch bei ausgeschaltetem Computer zu gewährleisten, wodurch stets Bedieneingaben für den Industrie-PC ermöglicht werden. Mit anderen Worten: Auch bei ausgeschaltetem Computer simuliert der Computer die Eingabeeinheit, z. B. in Form einer Tastatur, eines Touchpads und/oder einer Maus, welche für jede mit einer USB-Schnittstelle versehene Komponente der Automatisierungseinrichtung eingesetzt werden kann.

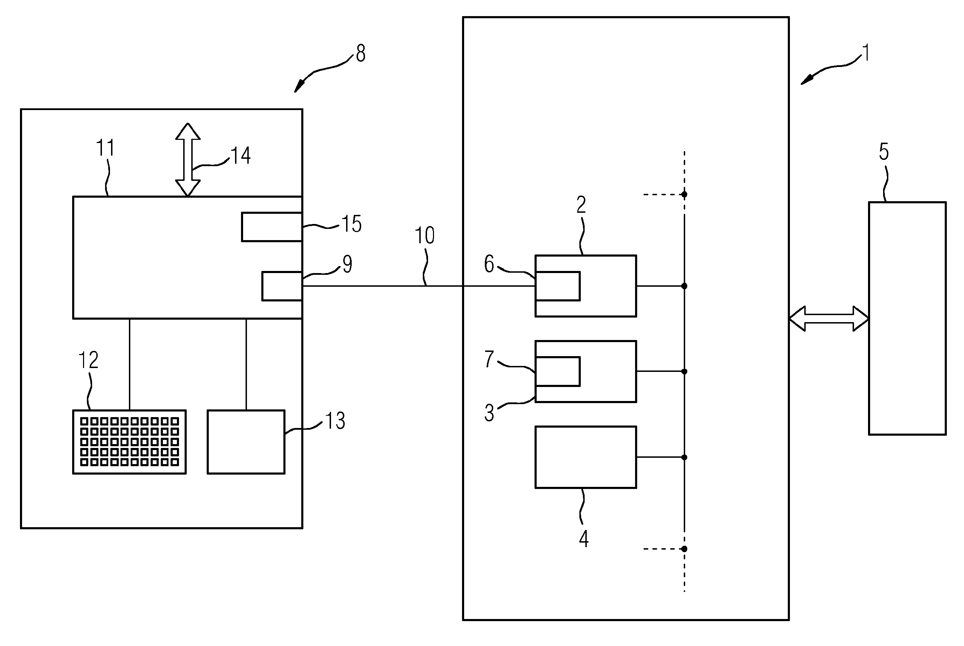

Die Erfindung, deren Ausgestaltungen sowie Vorteile werden nachfolgend anhand eines Ausführungsbeispiels unter Bezugnahme auf die einzige Figur der Zeichnung näher erläutert. Die Figur der Zeichnung zeigt in einer stark vereinfachten Darstellung eine Anordnung mit einem Bediengerät und Komponenten einer Automatisierungseinrichtung.

Eine mit 1 bezeichnete Automatisierungseinrichtung weist eine Vielzahl von Automatisierungskomponenten 2, 3, 4 auf, welche räumlich verteilt und/oder in einem Schaltschrank angeordnet sind. Die Automatisierungseinrichtung 1 ist zur Steuerung eines technischen Prozesses 5 vorgesehen, wobei Sensoren der Automatisierungseinrichtung 1 Prozesseingangswerte übermitteln. Die Automatisierungseinrichtung 1 verarbeitet diese Prozesseingangswerte und erzeugt Prozessausgangswerte zur Ansteuerung von Aktoren, die entsprechend diesen Werten auf den Prozess 5 einwirken, beispielsweise in der Art und Weise, dass die Temperatur eines Heizkessels und/oder die Dosierung einer Flüssigkeit für eine Dosier-Einrichtung erhöht wird.

Im vorliegenden Beispiel weisen die Komponenten 2, 3 jeweils eine an sich bekannte USB-Schnittstelle 6, 7 auf. Über die jeweilige Schnittstelle 6, 7 ist ein mobiler Computer in Form eines Notebooks 8 anschließbar, der ebenfalls mit einer USB-Schnittstelle 9 versehen ist. Im dargestellten Ausführungsbeispiel ist die Komponente 2, beispielweise ein an sich bekannter Industrie-PC, über die USB-Schnittstelle 6 dieser Komponente 2, ein USB-Kabel 10 und über die USB-Schnittstelle 9 des Notebooks 8 mit diesem Notebook 8 verbunden, wobei über diese Verbindung ein Informationsaustausch erfolgt.

Das Notebook 8 weist einen Controller 11 auf, an welchen eine Tastatur 12 und ein Touchpad 13 angeschlossen sind, wobei der Controller 11 zumindest als Tastatur- und Touchpad-Controller arbeitet. Selbstverständlich kann der Controller 11 weitere Funktionen verwirklichen, beispielsweise kann dieser zur Steuerung der Helligkeit des Notebook-Displays, zur Regelung der Lüfterdrehzahl oder zur Festplattensteuerung des Notebooks ausgebildet sein. Dazu ist der Controller 11 an einen Systembus 14 des Notebooks 8 angeschlossen, über den geeignete Steuersignale übermittelt werden.

Die Komponente 2 versorgt über ihre USB-Schnittstelle 6, über das USB-Kabel 10 und die USB-Schnittstelle 9 den Controller 11 mit einer für den Betrieb des Controllers 11 geeigneten Betriebsspannung, wodurch der Controller 11 auch bei ausgeschaltetem Notebook 8 von einem Servicetechniker bewirkte Tastatur- und/oder Touchpad-Eingaben auswerten kann. Für den Fall, dass der Anwender eine vorgegebene Taste oder eine vorgegebene Tastenkombination der Tastatur 12 bedient, schaltet der Controller 11 einen Treiber- bzw. Firmware-Baustein 15 frei, wodurch das Notebook 8 als Bediengerät für die Komponente 2 freigeschaltet ist. Mit anderen Worten: Aufgrund dieser Freischaltung simuliert das Notebook 8 eine Tastatur für die Komponente 2, wobei in diesem Fall Tastatureingaben des Anwenders der Komponente 2 übermittelt werden. Mittels dieser Tastatureingaben leitet der Service-Techniker Service-Maßnahmen ein, beispielsweise in der Art, dass eine Software bzw. eine Routine zum Auslesen von Daten eines Diagnose- oder Fehlerspeichers der Komponente 2 oder eine Testroutine dieser Komponente 2 gestartet wird.

Erst dann, wenn die Freischaltung des Treiber-Bausteins 15 aufgehoben bzw. deaktiviert wird, beispielsweise indem der Service-Techniker eine weitere vorgegebene Taste oder Tastenkombination bedient bzw. betätigt, wird die Simulation beendet und die Tastatur 12 kann - für den Fall, dass das Notebook 8 eingeschaltet ist bzw. eingeschaltet wird - wieder für Notebook-Eingaben genutzt werden, was bedeutet, dass Tastatur-Eingaben auf im Notebook 8 ablauffähige Anwendungen wirken, z. B. auf an sich bekannte Office-Anwendungen.

Die Freischaltung des Treiber-Bausteins 15 sowie das Aufheben bzw. die Deaktivierung dieser Freischaltung kann auch dadurch bewirkt werden, dass ein dazu vorgesehener Schalter des Notebooks 8 betätigt wird.

In der beschriebenen Art und Weise kann der Service-Techniker Service-Maßnahmen auch an der Komponente 3 einleiten und/oder durchführen. Das Notebook 8 wird dazu an die USB-Schnittstelle 7 der Komponente 3 angeschlossen, wobei das Notebook 8 eine Tastatur für die Komponente 2 simuliert und Tastatureingaben der Komponente 3 zugeführt werden.

Die Erfindung lässt sich wie folgt zusammenfassen:
Eine Anordnung mit mehreren Komponenten 2, 3, 4 einer Automatisierungseinrichtung 1 und mit einem Bediengerät 8, wobei das Bediengerät 8 und mindestens eine dieser Komponenten 2, 3, 4 jeweils eine USB-Schnittstelle 6, 7, 9 aufweisen, die zum Anschließen des Bediengerätes 8 an die mindestens eine Komponente 2, 3 über ein USB-Kabel 10 und zur Übermittlung von Bediengerät-Eingaben an die mindestens eine Komponente 2, 3 vorgesehen sind, wobei die Bediengerät-Eingaben Servicemaßnahmen an der mindestens einen Komponente 2, 3 einleiten, zeichnet sich dadurch aus, dass
   - das Bediengerät 8 als ein mit einer Eingabeeinheit 12, 13 versehener mobiler Computer 8 ausgebildet ist,
   - eine vorgegebene Eingabe mittels der Eingabeeinheit 12, 13 oder eine vorgegebene Schalterbetätigung am Computer 8 einen Treiber-Baustein 15 des Computers 8 freischaltet und
   - der Treiber-Baustein 15 dazu ausgebildet ist, nach dessen Freischaltung weitere Eingaben mittels der Eingabeeinheit 12 der mindestens einen Komponente 2, 3 zu übermitteln.

## Patentansprüche

1. Anordnung mit mehreren Komponenten (2, 3, 4) einer Automatisierungseinrichtung (1) und mit einem Bediengerät (8), wobei das Bediengerät (8) und mindestens eine dieser Komponenten (2, 3, 4) jeweils eine USB-Schnittstelle (6, 7, 9) aufweisen, die zum Anschließen des Bediengerätes (8) an die mindestens eine Komponente (2, 3) über ein USB-Kabel (10) und zur Übermittlung von Bediengerät-Eingaben an die mindestens eine Komponente (2, 3) vorgesehen sind, wobei die Bediengerät-Eingaben Servicemaßnahmen an der mindestens einen Komponente (2, 3) einleiten, **dadurch gekennzeichnet, dass**
- das Bediengerät (8) als ein mit einer Eingabeeinheit (12, 13) versehener mobiler Computer (8) ausgebildet ist,
- eine vorgegebene Eingabe mittels der Eingabeeinheit (12, 13) oder eine vorgegebene Schalterbetätigung am Computer (8) einen Treiber-Baustein (15) des Computers (8) freischaltet und
- der Treiber-Baustein (15) dazu ausgebildet ist, nach dessen Freischaltung weitere Eingaben mittels der Eingabeeinheit (12) der mindestens einen Komponente (2, 3) zu übermitteln.

2. Anordnung nach Anspruch 1, **dadurch gekennzeichnet, dass** der mobile Computer (8) ein Laptop, ein Notebook, ein Netbook, ein Tablet-Computer oder ein Smartphone ist.

3. Anordnung nach Anspruch 1 oder 2, **dadurch gekennzeichnet, dass** die mindestens eine Komponente (2, 3) die USB-Schnittstelle (9) des mobilen Computers (8) mit Energie versorgt.

4. Bediengerät für eine Anordnung nach einem der Ansprüche 1 bis 3, wobei das Bediengerät (8) eine USB-Schnittstelle (9) zum Anschließen des Bediengerätes an mindestens eine Komponente (2, 3) und zur Übermittlung von Bediengerät-Eingaben an die mindestens eine Komponente (2, 3) aufweist, wobei die Bediengerät-Eingaben Servicemaßnahmen an der mindestens einen Komponente (2, 3) einleiten, **dadurch gekennzeichnet, dass**
- das Bediengerät als ein mit einer Eingabeeinheit (12, 13) versehener mobiler Computer (8) ausgebildet ist,
- eine vorgegebene Eingabe mittels der Eingabeeinheit (12, 13) oder eine vorgegebene Schalterbetätigung am Computer (8) einen Treiber-Baustein des Computers (8) freischaltet, und
- der Treiber-Baustein (15) dazu ausgebildet ist, nach dessen Freischaltung weitere Eingaben mittels der Eingabeeinheit (12, 13) der mindestens einen Komponente (2, 3) zu übermitteln.

5. Bediengerät nach Anspruch 4, **dadurch gekennzeichnet, dass** der mobile Computer (8) ein Laptop, ein Notebook, ein Netbook, ein Tablet-Computer oder ein Smartphone ist.

6. Bediengerät nach Anspruch 4 oder 5, **dadurch gekennzeichnet, dass** die USB-Schnittstelle (9) des mobilen Computers (8) zur Energieaufnahme ausgebildet ist.
